# EUROPEAN PATENT APPLICATION

(11) **EP 4 418 154 A1**
(43) Date of publication of application: **21.08.2024**
(21) Application number: 23305209.1
(22) Date of filing: 16.02.2023
(51) Int. Cl.: G06F 21/36, G06F 21/83

(54) **METHOD AND DEVICE FOR SECURE ENTRY OF A CODE IN A DEVICE**

(71) Applicant: THALES DIS FRANCE SAS, 92190 Meudon (FR)
(72) Inventor: JOSHI, Pankaj, Ottawa K2E7M6 (CA)
(74) Representative: Grevin, Emmanuel

(57) **Abstract**

The invention is a method for secure entry of a code in a device (10) comprising a touch screen (18). The method comprises the following steps:
displaying one or more streams (21,...,28) on the touch screen, each of said streams comprising its own plurality of symbols and scrolling in its own direction;
detecting, by the device, a set comprising two or more of said symbols, each symbol of said set being specified by a user via a tap on the touch screen; and
automatically building the code from the symbols of the set by applying a predefined rule.

## Description

### (Field of the invention)

The present invention relates to devices and methods for securely entering a code on a device. It relates particularly to methods of capturing personal or secret codes on hardware devices that can be used in unsecured areas.

### (Background of the invention)

During some secured treatments or transactions, an individual may need to enter a secret value (like their PIN code or password) directly on the physical user interface of a device. Such device requiring entering of a secret code may be and Automated Teller Machine (ATM) or a smartphone for example.

Shoulder surfing or pattern guessing while entering secrets on touch devices are ways for an attacker to steal the secret code quietly without the knowledge of the legitimate user.

The document WO2002100016 A1 proposes a method based on multiple symbols placed in pseudo-random location.

The document WO200048076 A1 describes a method for secure entry of a code based on a plurality of selectable and fields randomly located.

The document EP2597590 A2 describes a method for entering a password based on a pattern formed by an object arranged in a designated position of the input keyboard.

### (Summary of the Invention)

There is need to enhance the way to securely type a code on a device exposed or used in public.

The invention aims at solving the above-mentioned technical problem.

An object of the present invention is a computer-implemented method for secure entry of a code in a device that comprises a touch screen. The method comprises the steps of:
displaying one or more streams on the touch screen, each of said streams comprising its own plurality of symbols and scrolling in its own direction;
detecting, by the device, a set comprising two or more of said symbols, each symbol of said set being specified by a user via a tap on the touch screen; and
automatically building said code from the symbols of the set by applying a predefined rule.

Advantageously, in response to detecting a tap on a touched symbol belonging to the one or more streams, the device may add the touched symbol in the set. The code may consist of a sequence of symbols and the device may build the code according to the order in which the device detects tap on each symbol of the set.

Advantageously, the touch screen may display a container comprising a plurality of sensing areas placed in a particular order relative to each other. In response to detecting a drag and drop operation of a symbol belonging to the one or more streams toward one of said sensing areas, the device may add the moved symbol in the set. The code may consist of a sequence of symbols and the device may build the code according to said particular order.

Advantageously, the touch screen may display a container comprising a plurality of sensing areas placed in a particular order relative to each other. In response to detecting a drag and drop operation of a sensing area of the container toward a target symbol belonging to the one or more streams, the device may add the target symbol in the set. The code may consist of a sequence of symbols and the device may build the code according to said particular order.

Advantageously, each of said streams may scroll at its own speed.

Advantageously, the touch screen may display each of said streams may using a font size specific to each stream.

Advantageously, at least one of said one or more streams may have duplicate symbols or symbols randomly distributed.

Another object of the present invention is a device for securely entering a code. The device comprises a touch screen and is configured to display one or more streams on the touch screen, each of said streams comprising its own plurality of symbols and scrolling in its own direction. The device is configured to detect a set comprising two or more of said symbols, each symbol of said set being specified by a user via a tap on the touch screen. The device is configured to automatically build said code from the symbols of the set by applying a predefined rule.

Advantageously, in response to detecting a tap on a touched symbol belonging to the one or more streams, the device may be configured to add the touched symbol in the set. The code may consist of a sequence of symbols and the device may be configured to build the code according to the order in which the device detects tap on each symbol of the set.

Advantageously, the device may be configured to display on the touch screen a container comprising a plurality of sensing areas placed in a particular order relative to each other. In response to detecting a drag and drop operation of a symbol belonging to the one or more streams toward one of said sensing areas, the device may be configured to add the moved symbol in the set. The code may consist of a sequence of symbols and the device may be configured to build the code according to said particular order.

Advantageously, the device may be configured to display on the touch screen a container comprising a plurality of sensing areas placed in a particular order relative to each other. In response to detecting a drag and drop operation of a sensing area of the container toward a target symbol belonging to the one or more streams, the device may be configured to add the target symbol in the set. The code may consist of a sequence of symbols and the device may be configured to build the code according to said particular order.

Advantageously, the device may be configured to scroll at least two streams at different speeds.

Advantageously, at least one of said one or more streams may have duplicate symbols or symbols randomly distributed.

Advantageously, at least one of said one or more streams may be displayed as a broken stream.

Advantageously, the device may be an Automated Teller Machine, a smart phone, a Personal Digital Assistant, a game console, a portable computer or a terminal controlling access to a secure area.

### (Brief description of the drawings)

Other characteristics and advantages of the present invention will emerge more clearly from a reading of the following description of a number of preferred embodiments of the invention with reference to the corresponding accompanying drawings in which:
Figure 1 shows an exemplary flow diagram for entering a secret code value on a hardware device according to an example of the invention;
Figure 2 shows a geometric distribution of sensing areas on a phone touch screen according to an example of the invention;
Figure 3 shows a first detailed embodiment of a geometric distribution of sensing areas on a phone touch screen according to an example of the invention; and
Figure 4 shows a second detailed embodiment of a geometric distribution of sensing areas on a phone touch screen according to an example of the invention.

### (Detailed description of the preferred embodiments)

The invention may apply to any type of device equipped with a touch screen. The invention may apply to portable devices like smartphones, Personal Digital Assistants (PDA), game consoles or portable computers for instance. The invention may apply to fixed devices like ATM or access control terminals to secure areas.

The device may use the entered code for enabling, authorizing or performing a computer treatment or a transaction. For example, the typed code may be required to unlock a smart phone, to authorize a payment transaction, to access service or to access a physical area.

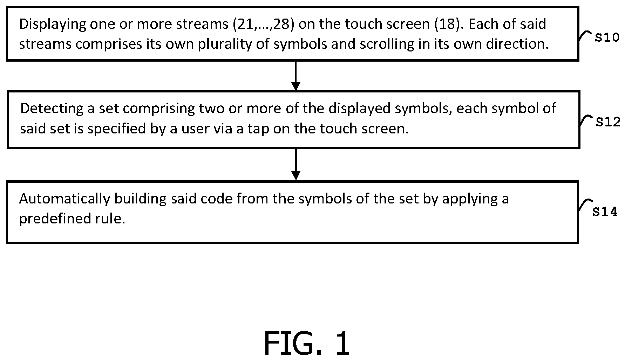

Fig. 1 depicts an exemplary flow diagram for entering a secret code value on a hardware device according to an example of the invention.

In this example, the device is a phone having a touch screen. The code may be a password, a passphrase, or a PIN code for instance.

In a first step S10, the device displays one or more streams on its touch screen. Each stream comprises its own plurality of symbols and scrolls in its own direction. Symbols can be letters or numbers.

At this stage, the user sees one or more series of scrolling symbols.

Then the user selects a set comprising two or more of the displayed symbols by pressing the touch screen and the device detects the set of selected symbols specified by the user at step S12.

At step S14, the device automatically builds the code from the symbols of the set by applying a predefined rule. For example, the predefined rule may specify that the reconstitution of the code value is done by respecting the order in which each symbol was touched by the user during the selection step. Other rules are possible as will be detailed in relation to the other Figures.

In some embodiments, in response to detecting a tap on a touched symbol belonging to a displayed stream(s), the device adds the touched symbol in the set of selected symbols. The code consists of a sequence of symbols and the device builds the code according to the order in which the device detects a tap corresponding to each symbol of the set. This way, the user enters the code only by tapping progressively each symbol of the desired sequence of symbols.

In some embodiments, the touch screen displays a container comprising a plurality of sensing areas placed in a particular order relative to each other. In response to detecting a drag and drop operation of a symbol belonging to a displayed stream(s) toward one of the sensing areas, the device adds the moved symbol in the set of selected symbols. In this case, the code consists of a sequence of symbols and the device builds the code according to the particular order. This way, the user enters the code by an ordered sequence of drag & drop operations from the displayed stream(s) to the container.

In some embodiments, the touch screen displays a container comprising a plurality of sensing areas placed in a particular order relative to each other. In response to detecting a drag and drop operation of a sensing area of the container toward a target symbol belonging to the displayed stream(s), the device adds the target symbol in the set of selected symbols. In this case, the code consists of a sequence of symbols and the device builds the code according to the particular order. This way, the user enters the code by an ordered sequence of drag & drop operations from the sensing areas of the container to symbols belonging to the displayed stream(s). Sensing areas can have a circular shape or any other relevant form.

In some embodiments, as soon as a sensing area is filled, the device displays a preset symbol (like a star "*" for instance) in the filled sensing area of the container.

Preferably, the container comprises as many sensing areas as the expected code has digits.

In some embodiments, the device can display two or more containers. For instance, a first container may be dedicated to enter a login/name while a second container may be dedicated to enter a password.

In some embodiments, the device displays two or more streams on its touch screen and each of the streams scrolls at its own speed. For instance, a first stream may scroll slowly from bottom to top of the touch screen while a second stream may scroll rapidly from right to left of the touch screen. Each stream may be configured to scroll on across the entire touch screen or in a predefined reduce part (e.g. a window) of the touch screen.

In some embodiments, the device displays two or more streams on its touch screen and each of the streams is displayed with its own font or font size.

In some embodiments, at least one displayed stream has duplicate symbols and/or symbols randomly distributed.

In some embodiments, the device immediately erases each symbol touched by the user and may replace it by a generic symbol or a symbol chosen at random.

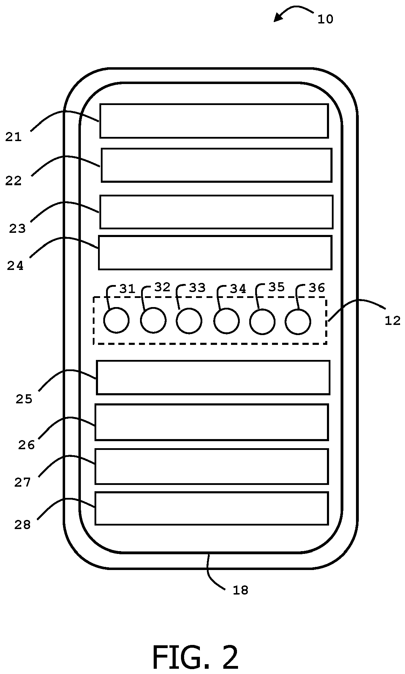

Fig. 2 depicts a geometric distribution of sensing areas on a phone touch screen according to an example of the invention.

The device 10 is a smart phone comprising a touch screen 18. The surface of the touch screen 18 is split in nine separate areas 12, and 21 to 28. The area 12 is a container 12 that comprises six ordered sensing areas 31 to 36 having a circular shape.

The areas 21 to 28 are assigned to as many streams. In this example, each of the eight streams has an independent area (e.g. a window) reserved for it on the screen. Symbols will scroll in these horizontal areas.

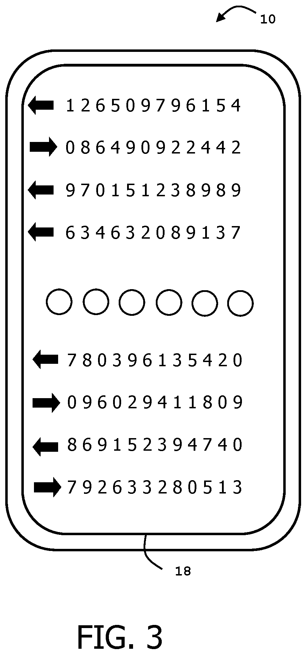

Fig. 3 shows a detailed embodiment of the geometric distribution presented at Fig.2.

The area 21 allocated to the first stream displays twelve symbols that scroll left. For reader convenience, the arrow indicates the direction of scrolling. (The device does not display the arrows.) In this example, the symbols are numbers presented in random order.

The areas 23, 24, 25 and 27 (by reference to Fig. 2) scroll left and correspond to as many different streams of numerical symbols.

The areas 22, 26 and 28 (by reference to Fig. 2) scroll to the right and correspond to as many different streams of numerical symbols.

The user of the smart phone can drag and drop a symbol selected in any streams to populate one sensing areas (31-36) belonging to the container 12. Depending on the configuration of the device, the user can drag a selected symbol, move it to the desired sensing area then drop it. In response to such a drag & drop operation, the device assigns the selected symbol to the targeted sensing area.

Depending on the configuration of the device, the user can drag a sensing area, move it to the desired selected symbol then drop it. In response to such a drag & drop operation, the device assigns the selected symbol to the targeted sensing area.

Preferably, the user may fill the sensing areas in the order of their choice.

Preferably, the device may display a predefined symbol (like a star "*" for instance) as soon as it assigns a selected symbol to a targeted sensing area so that the user is able to identify the remaining free sensing area(s) to fill.

In some embodiments, the device can allow the user to replace a symbol already assigned to a sensing area. For instance, a further drag & drop operation can allow to overwrite the previously chosen symbol in a sensing area. This way, the user can correct an input error.

In some embodiments, the device can handle a button (digital or physical) allowing the user to validate the end of the code entry. Alternatively, the device may be designed to consider the code as fully entered as soon as all sensing areas of the container are filled.

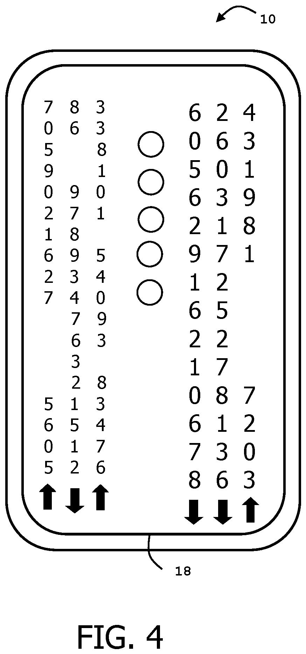

Fig. 4 depicts another detailed embodiment of the invention based on a geometric distribution different form the one presented at Fig. 2.

The device 10 is a smart phone comprising a touch screen 18. The surface of the touch screen 18 is split in seven separate areas: a container and six streams. The container comprises five sensing areas displayed vertically and implicitly ordered from top to bottom.

The three streams on the left side are displayed using a small font size while the three streams on the right side are displayed using a big font size. In this example, each of the six streams has an independent area (e.g. a window on the touch screen) reserved for it. Symbols will scroll in these vertical areas.

As indicated by the arrows, each stream scrolls in its own direction (e.g. top or bottom).

In the example of Fig 4, only two streams are displayed as continuous series. The other four streams are displayed as broken series; each of them having one or more holes.

Each stream may scroll at its own specific speed different from the scrolling speed of the other streams.

Preferably, at least one stream comprises duplicate symbols.

Preferably, at least one stream comprises symbols randomly distributed.

In some embodiments, at least one stream may contain some flashing symbols.

In some embodiments, at least one stream may contain some symbols whose font size changes over the time.

In some embodiments, at least one stream may change its scrolling direction.

In some embodiments, at least one stream may be display in a window (part of the touch screen) that moves over time.

In some embodiments, the streams are prepopulated with symbols and displayed in frozen manner at the beginning of the phase where the user is requested to enter the code. After a predetermined time (e.g. 2 or 5 seconds), the streams start scrolling in direction and speed as per configuration. Thus, user can quickly pick a symbol among the displayed streams.

In some embodiments, the device may be configured to detect and handle simultaneous drag and drop actions targeting two distinct sensing areas. Thus, the user may fill two distinct digits of the code at the same time.

In some embodiments, the touch screen may display an additional static stream that does not scroll.

Although not apparent on the presented Figures, in some embodiments, the touch screen may be devoid of container. In such a cases, the simple act of touching (taping) a symbol selects this symbol in a preestablished order to build the code.

In some embodiments, the device 10 may comprise a display engine configured to display the streams and the container. The device 10 may comprise a detector engine configured to detect a plurality of taps (or drag and drop actions) on the displayed symbols and sensing areas and designed to allocate a selected symbol to the chosen sensing area or to the relevant digit of the entered code. The detector engine may be configured to interpret tapping on a special sensing area or button as an order validating (i.e. finalizing) the entry of the entered code. The detector engine is configured to send the entered code to a conventional checking entity which is in charge to check the content of the code to verify if the code is correct.

The device 10 may comprise a configurator engine configured to get inputs from the device user and to update entry parameters according to choices retrieved from the user. The entry parameters may be the presence of the container and the number, position, size, scrolling direction, scrolling speed, stream type (continuous/discontinuous), font, font size and content of each stream.

In some embodiments, the device can store two or more sets of entry parameters and the display engine can be configured to select and apply one of the available sets of entry parameters according to a previous assessment of the risk. For instance, in the device is an ATM placed in a street, the ATM may comprise a camera and select a configuration in which both stream scrolling speed and stream number is high if the camera detects the user is not alone proximate the ATM. (High risk of code stealing). Conversely, the ATM may select a configuration in which stream scrolling speed is low and stream font size is big if the camera detects the user is alone proximate the ATM. (low risk of code stealing)

In some embodiments, a camera on the device can help identifying the threats around the user, like more number of people looking at the screen or another real camera facing the lock screen. The picture taken by the camera of the device can be used by the device to assess a risk context and to notify user while they are entering PIN, so they can be more careful and use more difficult stream to pick number of to change the position of device to avoid other camera facing the lock screen.

The display engine, the detector engine and the configurator engine can be implemented as many sets of program instructions executed by a hardware processor embedded in the device.

Thanks to some embodiment, the duplicate symbols and the scrolling streams increase difficulty for an attacker to guess which code the legitimate user enters. The user may pick a stream among the proposed streams then focus and match the speed of the stream to easily select every symbols allowing building the secret code.

Thanks to some embodiment, the selected symbols are immediately removed from the displayed streams. By doing so, confidentiality of sensitive data (entered code) is preserved since no trace of the digit/symbol entered is visible to a nearby observer.

Although the method has been described for a mobile handset, some embodiments of the invention may apply to other types of device. For example, the device may be a dedicated input device, Personal Digital Assistant (PDA), a laptop, Point-Of-Sale terminal or an Automated Teller Machine (ATM).

The invention is not limited to the described embodiments or examples. In particular, the described examples and embodiments may be combined.

The symbols are not limited to letters of the alphabets and number. They may be a wide range of other characters of any shape.

## Claims

1. A computer-implemented method for secure entry of a code in a device (10) comprising a touch screen (18),
wherein the method comprises:
displaying one or more streams (21,...,28) on the touch screen, each of said streams comprising its own plurality of symbols and scrolling in its own direction;
detecting, by the device, a set comprising two or more of said symbols, each symbol of said set being specified by a user via a tap on the touch screen; and
automatically building said code from the symbols of the set by applying a predefined rule.

2. The method according to claim 1, wherein, in response to detecting a tap on a touched symbol belonging to the one or more streams, the device adds the touched symbol in the set;
wherein the code consists of a sequence of symbols and wherein the device builds the code according to the order in which the device detects tap on each symbol of the set.

3. The method according to claim 1, wherein the touch screen displays a container (12) comprising a plurality of sensing areas (31,...,36) placed in a particular order relative to each other;
wherein, in response to detecting a drag and drop operation of a symbol belonging to the one or more streams toward one of said sensing areas, the device adds the moved symbol in the set;
wherein the code consists of a sequence of symbols and wherein the device builds the code according to said particular order.

4. The method according to claim 1, wherein the touch screen displays a container (12) comprising a plurality of sensing areas (31,...,36) placed in a particular order relative to each other;
wherein in response to detecting a drag and drop operation of a sensing area of the container toward a target symbol belonging to the one or more streams, the device adds the target symbol in the set;
wherein the code consists of a sequence of symbols and wherein the device builds the code according to said particular order.

5. The method according to claim 1, wherein each of said streams scrolls at its own speed.

6. The method according to claim 1, wherein each of said streams is displayed with its own font size.

7. The method according to claim 1, wherein at least one of said one or more streams has duplicate symbols or symbols randomly distributed.

8. A device (10) for securely entering a code, the device comprising a touch screen (18),
wherein the device is configured to display one or more streams (21,...,28) on the touch screen, each of said streams comprising its own plurality of symbols and scrolling in its own direction;
wherein the device is configured to detect a set comprising two or more of said symbols, each symbol of said set being specified by a user via a tap on the touch screen; and
wherein the device is configured to automatically build said code from the symbols of the set by applying a predefined rule (11).

9. The device according to claim 8, wherein, in response to detecting a tap on a touched symbol belonging to the one or more streams, the device is configured to add the touched symbol in the set;
wherein the code consists of a sequence of symbols and wherein the device is configured to build the code according to the order in which the device detects tap on each symbol of the set.

10. The device according to claim 8, wherein the device is configured to display on the touch screen a container (12) comprising a plurality of sensing areas (31,...,36) placed in a particular order relative to each other;
wherein, in response to detecting a drag and drop operation of a symbol belonging to the one or more streams toward one of said sensing areas, the device is configured to add the moved symbol in the set;
wherein the code consists of a sequence of symbols and wherein the device is configured to build the code according to said particular order.

11. The device according to claim 8, wherein the device is configured to display on the touch screen a container (12) comprising a plurality of sensing areas (31,...,36) placed in a particular order relative to each other;
wherein in response to detecting a drag and drop operation of a sensing area of the container toward a target symbol belonging to the one or more streams, the device is configured to add the target symbol in the set;
wherein the code consists of a sequence of symbols and wherein the device is configured to build the code according to said particular order.

12. The device according to claim 8, wherein the device is configured to scroll at least two streams at different speeds.

13. The device according to claim 8, wherein at least one of said one or more streams has duplicate symbols or symbols randomly distributed.

14. The device according to claim 8, wherein at least one of said one or more streams is displayed as a broken stream.

15. The device according to claim 8, wherein the device is an Automated Teller Machine, a smart phone, a Personal Digital Assistant, a game console, a portable computer or a terminal controlling access to a secure area.
